# EUROPEAN PATENT APPLICATION

(11) **EP 4 696 484 A1**
(43) Date of publication of application: **18.02.2026**
(21) Application number: 24843404.5
(22) Date of filing: 10.07.2024
(51) Int. Cl.: B29C 51/08, B29C 51/26, B29C 51/34, B29C 43/36, B29C 43/02, H01M 50/105

(54) **POUCH FORMING APPARATUS**

(30) Priority: 17.07.2023 KR 20230092602
(71) Applicant: LG Energy Solution, Ltd., Seoul 07335 (KR)
(72) Inventor: GWAK, Myeong Jun, Daejeon 34122 (KR)
(74) Representative: Goddar, Heinz J.
(86) International application number: PCT/KR2024/009829
(87) International publication number: WO 2025/018685

(57) **Abstract**

The present disclosure relates to a pouch forming device that forms a cup portion in a pouch sheet and the pouch forming device includes a die having a concavely recessed nest formed on an upper surface and a flat portion formed along the perimeter of the nest; a stripper pressing and fixing a portion of the pouch sheet placed on the flat portion when the pouch sheet is seated on the die; and a punch pressing the pouch sheet to enter the nest and forming a cup portion in the pouch sheet, wherein a bead is formed by protruding from the surface of the flat portion, and the bead is formed to form a curved shape on the flat portion.

## Description

### TECHNICAL FIELD

The present application claims priority to Korean Patent Application No. 10-2023-0092602 filed on July 17, 2023 in the Republic of Korea, the disclosures of which are incorporated herein by reference.

The present disclosure relates to a pouch forming device for manufacturing a pouch used in a secondary battery, and more specifically, to a pouch forming device capable of suppressing or blocking the occurrence of wrinkles and/or breakage when processing a pouch sheet.

### BACKGROUND ART

With the rapid development of the electrical, electronic, communication, and computer industries, the demand for high-performance and high-safety secondary batteries is gradually increasing. In particular, as the miniaturization, thinning, and lightweight of electronic devices are rapidly spreading, the resulting demand for miniaturization and thinning of secondary batteries is increasing day by day. In response to this demand, lithium secondary batteries with high energy density have recently attracted the most attention.

Lithium secondary batteries have the advantages of long life and large capacity, so they are widely used in portable electronic devices in recent years, and depending on the type of electrolyte, the lithium secondary batteries are classified into lithium metal secondary batteries and lithium-ion secondary batteries using a liquid electrolyte, and lithium polymer secondary batteries using a polymer solid.

Additionally, lithium secondary batteries may be classified into prismatic secondary batteries using prismatic cans, cylindrical secondary batteries using cylindrical cans, and pouch-type secondary batteries using pouches, depending on the type of exterior material sealing the electrode assembly.

And, among these, pouch-type secondary batteries have numerous advantages such as high energy density per unit weight and volume, thinning and lightweighting of secondary batteries, and low material costs for an exterior material, so they have been actively developed recently.

Pouch-type secondary batteries are generally manufactured in the following order. First, a positive electrode and a negative electrode are manufactured, a separator is interposed therebetween, and then they are laminated to manufacture an electrode assembly.

Then, the electrode assembly is inserted into the pouch together with an electrolyte solution.

At this time, the pouch is manufactured so that a metal layer (foil) and a synthetic resin layer are laminated, the synthetic resin layer being laminated on the upper and lower surfaces of the metal layer, and a cup portion, which is a recessed space, is formed to have a size in which the electrode assembly may be mounted.

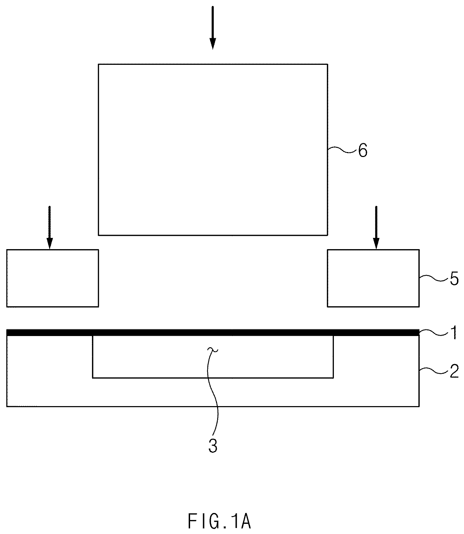

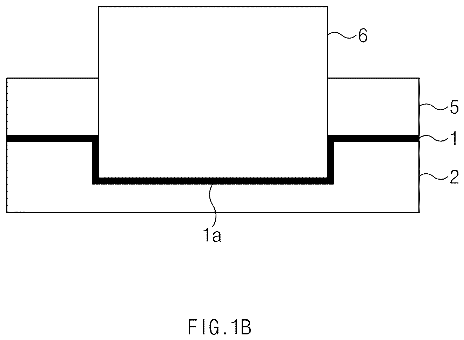

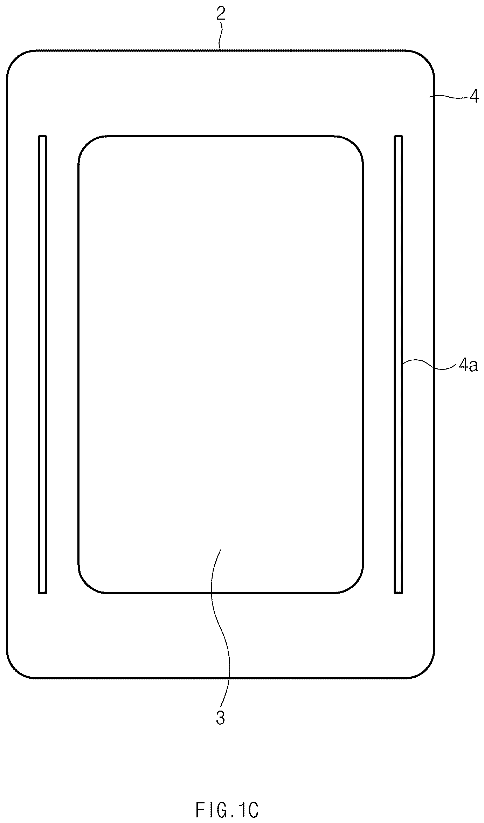

FIG. 1a is a view showing a conventional pouch forming device with a pouch sheet 1 inserted therein, FIG. 1b is a view showing a state in which the punch 6 descends while the stripper 5 descends and the pouch sheet 1 is fixed in the state of FIG. 1a, and FIG. 1c is a view showing a conventional die 2 viewed from top to bottom.

In the conventional pouch forming device, when a thin plate-shaped pouch sheet 1 having a predetermined thickness enters between the stripper 5 and the die 2, the stripper 5 descends downward so that the pouch sheet 1 is fixed between the upper surface of the die 2 and the bottom surface of the stripper 5.

Then, when the punch 6 descends and applies pressure, the pouch sheet 1 is stretched to form a cup portion 1a. Therefore, a nest 3 is formed in a concavely recessed shape on the upper surface of the die 2 so that the punch 6 may enter and descend to a predetermined depth. And, a flat portion 4 forming an upper surface is formed along the perimeter of the nest 3.

Therefore, the stripper 5 fixes the pouch sheet 1 to the flat portion 4 of the die 2, and the punch 6 presses and stretches the pouch sheet 1 on the inner peripheral surface of the nest 3 to form the cup portion 1a. As shown, the die 2 has a structure in which the flat portion 4 is formed on each side with the nest 3 in between, and the stripper 5 is positioned on each side of the punch 6 entering the nest 3.

Meanwhile, in order to prevent the pouch sheet 1 from slipping when the punch 6 descends, a bead 4a protruding convexly from the surface to a predetermined height is formed on the flat portion 4 of the die 2. In the conventional structure, the bead 4a is formed in a straight line on both sides of the nest 3 as shown in FIG. 1c.

And, the pouch sheet 1 is provided in a structure where a synthetic resin layer is laminated on both surfaces of the metal layer in the middle. That is, the pouch sheet is provided as a composite sheet in which an outer layer made of nylon or the like, a barrier layer made of aluminum or the like, and a sealant layer (inner layer) made of PP or the like are laminated.

The pouch sheet 1 starts forming when the punch 6 comes into contact with it, and is stretched along the full length and full width directions of the punch 6. At this time, the region that is not pressed by the bead 4a is pushed in (stretched) toward the nest 3.

In this case, as shown in FIG. 1c, since the nest 3 has a rectangular shape, it is pushed in (stretched) not only on the short side (upper side and lower side in FIG. 1c) of the nest 3 but also on the long side (left side and right side in FIG. 1c).

However, in FIG. 1c, the bead 4a is disposed on the long side corresponding to the left side and right side, and the volume pushed in (inflow volume: the volume that the pouch sheet is stretched and enters the nest) is limited by the bead 4a. This results in a difference between the inflow volume on the long side of the nest 3 and the inflow volume on the short side of the nest.

In particular, wrinkles or, in severe cases, breakage occurred due to the difference in inflow volume at the corners where the long side and the short side intersect.

Accordingly, there was a need for a pouch forming device to prevent wrinkles and/or breakage that mainly occur at the corners where the long side and the short side intersect.

### SUMMARY

### TECHNICAL PROBLEM

Therefore, the present disclosure is directed to providing a pouch forming device capable of preventing wrinkles and/or breakage when forming a pouch sheet.

More specifically, the present disclosure provides a pouch forming device capable of controlling the elongation of a pouch sheet (controlling the inflow volume) by providing beads in which the distance between the nest and the bead is relatively farther in the region forming the corner, and the distance between the nest and the bead is relatively closer in the region where the distance from the corner is farther, in order to increase the inflow volume near the corner where the cup portion is formed.

### TECHNICAL SOLUTION

A pouch forming device according to the present disclosure provided to achieve the above-described object is a pouch forming device that forms a cup portion in a pouch sheet and includes a die having a concavely recessed nest formed on an upper surface and a flat portion formed along a perimeter of the nest; a stripper pressing and fixing a portion of the pouch sheet placed on the flat portion when the pouch sheet is seated on the die; and a punch pressing the pouch sheet to enter the nest and forming a cup portion in the pouch sheet, wherein a bead is formed by protruding from a surface of the flat portion, and the bead is formed to form a curved shape on the flat portion.

The die is formed with two long sides parallel to each other at the boundary between the nest and the flat portion and two short sides parallel to each other and connecting the two long sides, and the flat portion includes a first region expanding along the long side; and a second region expanding along the short side, wherein the bead is formed in the first region.

The shortest distance between the bead and the long side within the first region is formed farthest at both ends of the bead and closest at the middle of the bead.

The beads are formed in each of the first regions at both sides of the nest. In this case, the beads are formed to be symmetrical to each other in each of the first regions at both sides.

A sub-bead may be (selectively) formed by protruding from the surface of the second region. In this case, the shortest distance between the sub-bead and the short side within the second region is formed farthest at both ends of the sub-bead and closest at the middle of the sub-bead.

The sub-beads are formed in each of the second regions at both sides with the nest in between.

The sub-beads are formed to be symmetrical to each other in each of the second regions at both sides.

And, the nest is divided into two partitioned nests by a compartment, and the compartment is formed in a direction parallel to the long side.

Also, a sub-bead is formed by protruding from the surface of the second region, and two of the sub-beads are formed in each of the second regions at both sides so as to place each partitioned nest therebetween.

### ADVANTAGEOUS EFFECTS

In the present disclosure having the above configuration, the bead is formed in a curved shape, and the shortest distance between the bead and the long side within the first region is formed to be closest at the middle of the bead and farthest at both ends of the bead, so that it is possible to prevent wrinkles and/or breakage of the pouch sheet mainly occurring near the corners of the nest.

That is, in the present disclosure, wrinkles and/or breakage may be prevented by increasing the inflow volume of the pouch sheet near the corners of the nest (when the punch descends), but reducing the inflow volume in the middle region between the long side and the short side (by reducing the difference in the inflow volume between the corner region and the middle region when molding the cup portion).

The beads are disposed to be symmetrical to each other at both sides based on the nest, so that the inflow volume at both sides may be matched equally.

Also, the sub-beads may additionally protrude from the surface of the second region to further increase the inflow volume near the corner.

Additionally, the curl problem, which is a phenomenon where the pouch film is partially rolled up due to the internal stress remaining after the forming process, may also be solved or minimized.

### BRIEF DESCRIPTION OF THE DRAWINGS

FIG. 1a is a view showing a conventional pouch forming device with a pouch sheet inserted therein.
FIG. 1b is a view showing a state in which the punch descends while the stripper descends and the pouch sheet is fixed in the state of FIG. 1a.
FIG. 1c is a view showing a conventional die viewed from top to bottom.
FIG. 2 is a view showing a die provided in Embodiment 1 of the present disclosure viewed from top to bottom.
FIG. 3 is a view showing a state in which sub-beads are additionally formed on the die shown in FIG. 2.
FIG. 4 is a view showing a die provided in Embodiment 2 of the present disclosure viewed from top to bottom.
FIG. 5 is a view showing a state in which sub-beads are additionally formed on the die shown in FIG. 4.

### DETAILED DESCRIPTION

Hereinafter, the present disclosure will be described in detail with reference to the accompanying drawings to enable those having ordinary skill in the technical field pertaining to the present disclosure to easily carry out the present disclosure. However, the present disclosure may be embodied in many different forms and is not limited by the embodiments described herein.

To clearly describe the present disclosure, parts irrelevant to the description are omitted, and the identical reference numerals are affixed to the identical or similar elements throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The present disclosure relates to a pouch forming device capable of preventing wrinkles and/or breakage by increasing the volume of inflow into the nest when forming a pouch sheet, and hereinafter, embodiments provided by the present disclosure will be described in more detail with reference to the accompanying drawings.

### Embodiment 1

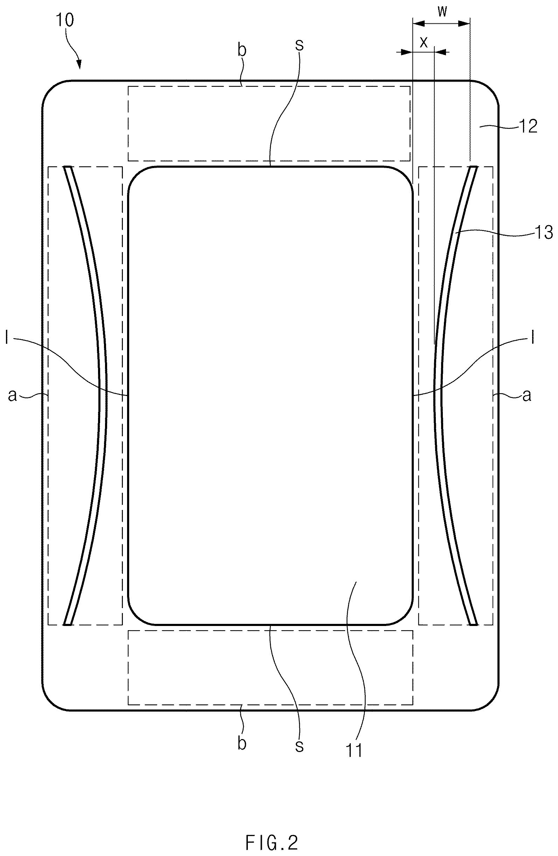

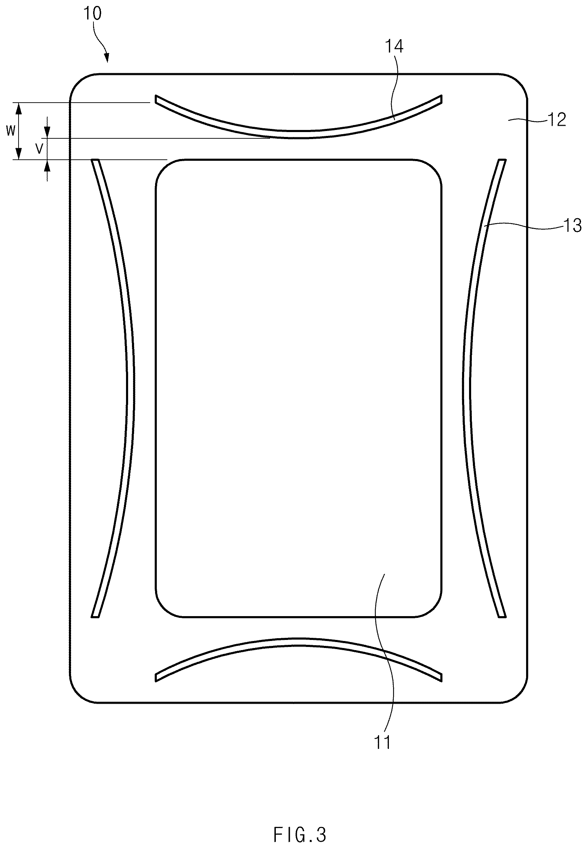

FIG. 2 is a view showing a die provided in Embodiment 1 of the present disclosure viewed from top to bottom, and FIG. 3 is a view showing a state in which sub-beads are additionally formed on the die shown in FIG. 2.

Referring to FIGS. 2 and 3, the pouch forming device provided in this embodiment is a forming device that forms a cup portion 1a in a pouch sheet 1, and includes a stripper, a punch and a die 10, wherein the bead 13 formed in the die 10 is formed to have a curved shape.

The die 10 is disposed to be placed below the pouch sheet and has a flat upper surface, and a nest 11 is formed in a concavely recessed shape (corresponding to the size and area of the cup portion to be formed in the pouch sheet) in the center of the upper surface. A portion of the upper surface excluding the nest 11, that is, the remaining portion excluding the nest 11 along the perimeter of the nest 11, forms a flat portion 12.

When the pouch sheet 1 is seated on the die 10, the stripper is positioned to press and fix a portion of the pouch sheet 1 placed on the flat portion 12. The stripper is disposed to press the flat portions 12 at both sides with the punch in between. In this case, the stripper may be formed with an engraved groove (not shown) so as to enter the interior to match the shape of the bead 13 and the sub-bead 14 at positions corresponding to the bead 13 and the sub-bead 14.

The punch is disposed above the die 10 and is configured to be able to ascend and descend. When ascending, it rises to a height enough for the pouch sheet 1 to enter between it and the die 10, and when descending, it enters the nest 11 and presses and stretches the pouch sheet 1 to the surface of the nest 11, thereby forming a cup portion 1a in the pouch sheet 1.

Also, as described above, in this embodiment, the bead 13 is formed by protruding from the surface of the flat portion 12, and the bead 13 is formed on the flat portion 12 to form a curved shape having a predetermined curvature.

The die 10 is formed with two long sides 1 parallel to each other at the boundary between the nest 11 and the flat portion 12 and two short sides s parallel to each other and connecting the two long sides 1.

That is, since the nest 11 is formed to have a rectangular shape when viewed from top to bottom as shown, the relatively longer side may be defined as the long side 1 and the relatively shorter side may be defined as the short side s.

Accordingly, the flat portion 12 may be divided into a first region a expanding along the long side 1 and a second region b expanding along the short side s. More specifically, the first region a means a rectangular region including the long side 1 that is the boundary between the nest 11 and the flat portion 12 as one of the two long sides. The other long side of the rectangular region is formed by a part of the long side of the die. Additionally, the second region b means a rectangular region including the short side s that is the boundary between the nest 11 and the flat portion 12 as one of the two short sides. The other short side of the rectangular region is formed by a part of the short side of the die.

In this embodiment, the bead 13 is formed in the first region a.

In this case, the shortest distance (straight line distance along the left and right directions based on FIG. 2) between the bead 13 and the long side 1 within the first region a is formed farthest w at both ends of the bead 13 and closest x at the middle of the bead 13.

That is, the beads 13 are disposed farthest w at both ends facing the corners of the nest 11 so that the inflow volume may be increased near the corners of the nest 11 (so that the stretchable region in the pouch sheet is widened). Conversely, since the pouch sheet is relatively less stretched at the middle portion of the nest 11 when the punch descends, the shortest distance between the bead 13 and the long side 1 is formed closest x so that the inflow volume may be lowered.

Also, the beads 13 are formed in each of the first regions a at both sides of the nest 11. And, the beads 13 are formed to be symmetrical to each other in each of the first regions a at both sides.

And, as shown in FIG. 3, the sub-beads 14 may be selectively formed by protruding from the surface of the second region b so as to further increase the volume of inflow toward the corners of the nest 11.

The sub-beads 14 are also formed such that the shortest distance between the sub-bead 14 and the short side s within the second region b is formed farthest w at both ends of the sub-bead 14 and closest v at the middle of the sub-bead 14 for the same reason as the beads 13.

And, the sub-beads 14 are formed in each of the second regions b at both sides with the nest 11 in between. Additionally, the sub-beads 14 are also formed to be symmetrical to each other in each of the second regions b at both sides.

### Embodiment 2

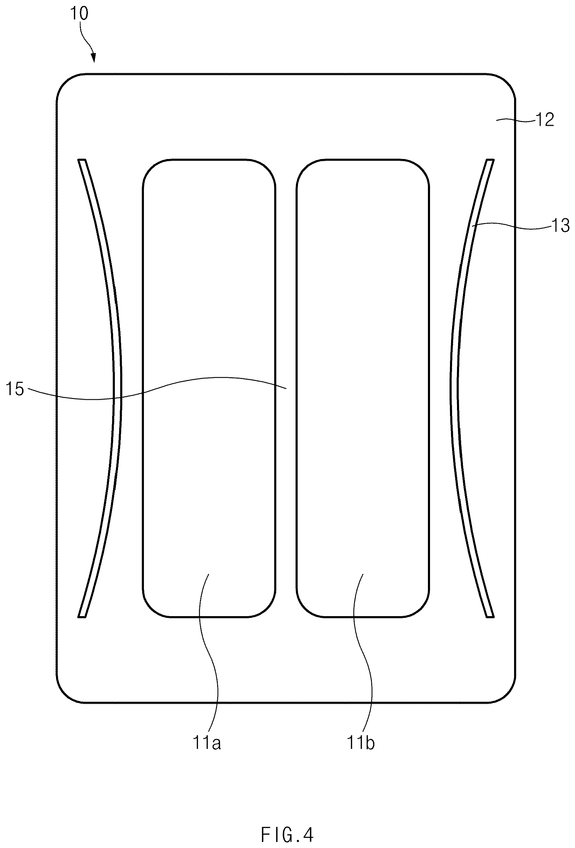

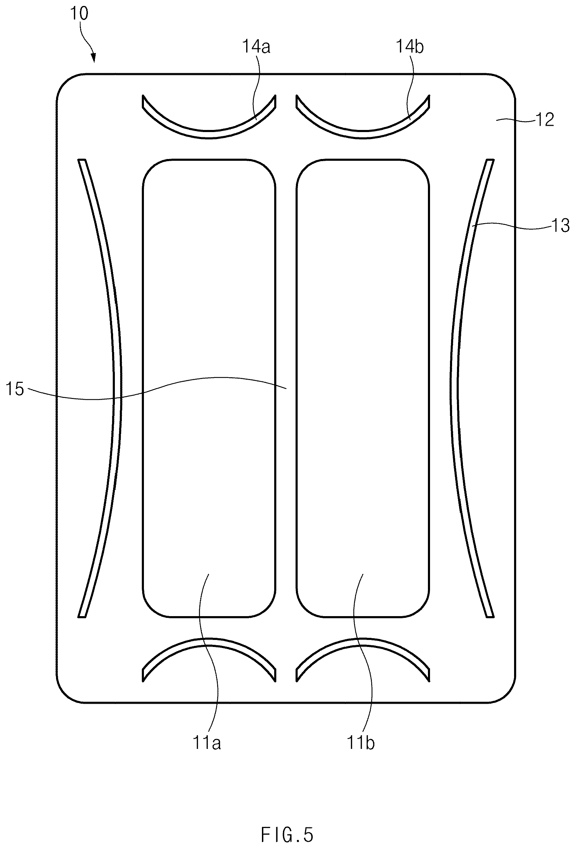

FIG. 4 is a view showing a die provided in Embodiment 2 of the present disclosure viewed from top to bottom, and FIG. 5 is a view showing a state in which sub-beads are additionally formed on the die shown in FIG. 4.

The nest provided in this embodiment is divided into two partitioned nests 11a, 11b by a compartment 15, and the compartment 15 is formed in a direction parallel to the long side 1.

In this embodiment, a stripper and a punch are also provided as in Embodiment 1.

When the pouch sheet is seated on the die 10, the stripper descends and presses the portion placed on the flat portion 12. And, an engraved groove may be formed so as to enter the interior to match the shape of the bead and the sub-bead at positions corresponding to the bead 13 and the sub-bead.

The punch is disposed above the die 10 and is configured to be able to ascend and descend. When ascending, it rises to a height enough for the pouch sheet 1 to enter between it and the die 10, and when descending, it enters each of the partitioned nests 11a, 11b and presses the pouch sheet 1 to the surface of the partitioned nests 11a, 11b, thereby forming a cup portion in the pouch sheet. The lower end of the punch provided in this embodiment has a shape capable of entering each of the partitioned nests 11a, 11b when descending, and is configured so as not to interfere with the compartment 15.

The partitioned nests are disposed to be placed below the pouch sheet and has a flat upper surface, but the partitioned nests 11a, 11b are formed in a concavely recessed shape (so that two cup portions to be formed in the pouch sheet may be formed) in the center of the upper surface, and the remaining portion excluding the partitioned nests 11a, 11b and the compartment 15 forms a flat portion 12.

The partitioned nests 11a, 11b are divided by the compartment 15, and the compartment 15 is formed to have a height equal to or slightly lower than the flat portion 12 of the die 10 (to have a slightly recessed shape).

In this embodiment, the bead 13 is formed by protruding from the surface of the flat portion 12 (more specifically, in the first region), and the bead 13 is formed on the flat portion 12 to form a curved shape having a predetermined curvature.

And, as in the structure of Embodiment 1, the bead 13 is formed such that the shortest distance between the bead 13 and the long side 1 within the first region a is farthest w at both ends and closest x at the middle.

Also, the beads 13 are formed in each of the first regions a at both sides of the partitioned nests 11a, 11b and are formed to be symmetrical to each other in each of the first regions a at both sides.

And, as shown in FIG. 5, the sub-beads 14a, 14b may be selectively formed by protruding from the surface of the second region b so as to further increase the volume of inflow toward the corners of each of the partitioned nests 11a, 11b. The sub-beads 14a, 14b are disposed to be located at the short sides s of each of the partitioned nests 11a, 11b. That is, two of the sub-beads 14a, 14b are formed in each of the second regions b at both sides so as to place each partitioned nests 11a, 11b therebetween.

The present disclosure having the above technical features may eliminate the inflow resistance occurring near the corners of the nest 11 intersecting in the full length and full width directions by having a straight bead 13. That is, in the conventional structure, the pouch sheet along the perimeter of the nest 11 has a different volume of elongation at each point, which may result in wrinkles.

However, in the present disclosure having the above configuration, the bead 13 is formed in a curved shape, and the shortest distance between the bead 13 and the long side within the first region a is formed to be closest at the middle of the bead and farthest at both ends of the bead, so that it is possible to prevent wrinkles and/or breakage of the pouch sheet mainly occurring near the corners of the nest 11.

That is, in the present disclosure, wrinkles and/or breakage may be prevented by increasing the inflow volume of the pouch sheet 1 near the corners of the nest (when the punch descends), but reducing the inflow volume in the middle region between the long side and the short side (by reducing the difference in the inflow volume between the corner region and the middle region when forming the cup portion).

The beads 13 are disposed to be symmetrical to each other at both sides based on the nest, so that the inflow volume at both sides may be matched equally.

Also, the sub-beads 14, 14a, 14b may additionally protrude from the surface of the second region to further increase the inflow volume near the corner.

Additionally, the curl problem, which is a phenomenon where the pouch film is partially rolled up due to the internal stress remaining after the forming process, may also be solved or minimized.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

10: Die
11: Nest
12: Flat portion
13: Bead
14: Sub-bead
15: Compartment

## Claims

1. A pouch forming device, which forms a cup portion in a pouch sheet, comprising:
a die having a concavely recessed nest formed on an upper surface and a flat portion formed along a perimeter of the nest;
a stripper pressing and fixing a portion of the pouch sheet placed on the flat portion when the pouch sheet is seated on the die; and
a punch pressing the pouch sheet to enter the nest and forming a cup portion in the pouch sheet,
wherein a bead is formed by protruding from a surface of the flat portion, and the bead is formed to form a curved shape on the flat portion.

2. The pouch forming device according to claim 1,
wherein the die is formed with two long sides parallel to each other at the boundary between the nest and the flat portion and two short sides parallel to each other and connecting the two long sides, and
the flat portion comprises:
a first region expanding along the long side; and
a second region expanding along the short side,
wherein the bead is formed in the first region.

3. The pouch forming device according to claim 2,
wherein the shortest distance between the bead and the long side within the first region is formed farthest at both ends of the bead and closest at the middle of the bead.

4. The pouch forming device according to claim 3,
wherein the beads are formed in each of the first regions at both sides of the nest.

5. The pouch forming device according to claim 4,
wherein the beads are formed to be symmetrical to each other in each of the first regions at both sides.

6. The pouch forming device according to any one of claims 2 to 5,
wherein a sub-bead is formed by protruding from the surface of the second region.

7. The pouch forming device according to claim 6,
wherein the shortest distance between the sub-bead and the short side within the second region is formed farthest at both ends of the sub-bead and closest at the middle of the sub-bead.

8. The pouch forming device according to claim 7,
wherein the sub-beads are formed in each of the second regions at both sides with the nest in between.

9. The pouch forming device according to claim 8,
wherein the sub-beads are formed to be symmetrical to each other in each of the second regions at both sides.

10. The pouch forming device according to claim 2,
wherein the nest is divided into two partitioned nests by a compartment, and the compartment is formed in a direction parallel to the long side.

11. The pouch forming device according to claim 10,
wherein a sub-bead is formed by protruding from the surface of the second region, and
two of the sub-beads are formed in each of the second regions at both sides so as to place each partitioned nest therebetween.
